# FASCICULE DE BREVET EUROPEEN

(11) **EP 0 715 186 B1**
(45) Date de publication et mention de la délivrance du brevet: **24.01.2001**
(21) Numéro de dépôt: 95402668.8
(22) Date de dépôt: 27.11.1995
(51) Int. Cl.: G01T 3/00

(54) **Chambre à fission subminiature avec passage étanche**
Kleinspaltkammer mit Isolierung
Miniature insulated fission chamber

(30) Priorité: 29.11.1994 FR 9414293
(43) Date de publication de la demande: 05.06.1996
(73) Titulaire: COMMISSARIAT A L'ENERGIE ATOMIQUE, 75015 Paris Cédex 15 (FR)
(72) Inventeur: Bignan, Gilles, F-13650 Meyrargues (FR); Guyard, Jean-Claude, F-13610 Le Puy Ste Reparade (FR)
(74) Mandataire: Moutard, Pascal Jean

(56) Documents cités:
- US-A- 3 879 612
- US-A- 4 404 164
- US-A- 4 495 144
- PATENT ABSTRACTS OF JAPAN vol. 008 no. 014 (P-249) ,21 Janvier 1984 & JP-A-58 174879 (TOKYO SHIBAURA DENKI KK) 13 Octobre 1983,

## Description

### Domaine technique

La présente invention se rapporte au domaine des détecteurs des particules (neutrons et γ), notamment pour les réacteurs de puissance, afin de caractériser, de manière non destructive, les milieux nucléaires.

La mesure en ligne de la puissance d'un réacteur peut être réalisée à l'aide de plusieurs types de capteurs. On connaît notamment :
- les thermomètres γ,
- les collectrons lents et/ou rapides,
- les chambres à fission.

La puissance dégagée dans le coeur d'un réacteur est, schématiquement, la somme de la puissance "instantanée" et de la puissance "résiduelle".

La puissance instantanée correspond au processus de fission, elle est associée à l'énergie cinétique des produits de fission, à l'énergie des γ et des neutrons instantanés de fission. Elle est directement corrélée au niveau de flux neutronique.

La puissance résiduelle correspond à l'énergie dégagée par la décroissance radioactive (principalement β et γ) des noyaux formés par fission ou capture, avec les diverses périodes de décroissance associées. Elle est corrélée à l'émission γ.

Une mesure en ligne de la puissance du réacteur nécessite donc une détection en ligne du flux neutronique, c'est-à-dire l'utilisation de capteurs majoritairement sensibles aux neutrons. Ceci n'est pas le cas des thermomètres γ et des collectrons rapides. Les collectrons lents sont bien adaptés au comptage neutronique mais présentent un temps de réponse incompatibles avec une mesure utilisable en protection de réacteur.

Les chambres à fission présentent de nombreux avantages. Leur efficacité est élevée, elles sont très faiblement perturbées par le rayonnement γ (de par la nature même du détecteur), et leur temps de réponse est instantané et uniquement limité par l'électronique de traitement.

La présente invention concerne précisément les chambres à fission.

### Etat de l'art antérieur

Une chambre à fission fonctionne sur le principe décrit dans le brevet FR-A-1 593 960.

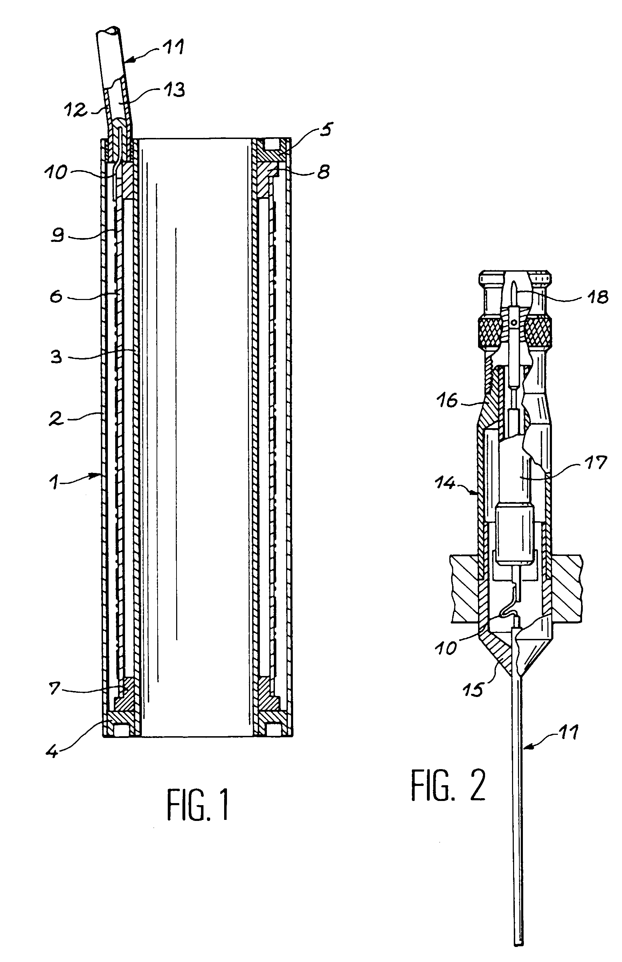

La figure 1 représente schématiquement, en coupe axiale, une chambre décrite dans ce document. Elle se compose essentiellement d'une double enveloppe métallique 1 en un matériau absorbant peu les neutrons, et formée de deux parois minces coaxiales 2 et 3 réunies à leurs extrémités au moyen de collerettes métalliques circulaires 4 et 5 sur lesquelles ces parois sont de préférence soudées. Entre ces parois et dans l'espace annulaire étanche qu'elles délimitent ainsi, est monté un tube coaxial 6, également métallique, immobilisé au moyen de bagues d'extrémité 7 et 8 en un matériau isolant électrique approprié. Sur l'une de ses faces, le tube 6 comporte un dépôt mince 9 d'un matériau fissile, par exemple d'uranium 235. A une de ses extrémités, le tube 6 est réuni par soudure à l'âme 10 d'un câble coaxial 11 dont le blindage 12, isolé de l'âme par une épaisseur convenable d'un isolant 13, est réuni à son tour à la collerette 5 reliant les parois 2 et 3. A son autre extrémité, le câble 11 est réuni à un connecteur 14 permettant la mise sous tension électrique de la chambre et dont la figure 2 illustre plus spécialement le détail de réalisation. Ce connecteur comporte deux pièces 15 et 16 s'emboîtant l'une dans l'autre en enfermant entre elles un organe de liaison étanche 17 entre l'extrémité de l'âme conductrice 10 du câble et une fiche de sortie 18. Le blindage 12 est pour sa part relié aux parois 2 et 3 et au corps du connecteur 14.

Le tube intérieur 6 constitue l'anode ou l'électrode collectrice de la chambre à fission, la cathode ou électrode haute tension étant formée par les parois 2 et 3 de l'enveloppe 1 réunies par les collerettes d'extrémité 4 et 5. L'espace étanche délimité entre ces parois et le tube 6 est rempli, au cours du montage de la chambre, d'un gaz neutre à pression déterminée, de préférence constitué par de l'argon.

Les fragments de fission en particules ionisantes produites par l'impact du flux de neutrons sur le matériau fissile de l'anode donnent naissance, dans le gaz de remplissage, à la formation d'ions, ces ions étant collectés par les électrodes en fournissant sur celles-ci des impulsions de tension dont la mesure ou le comptage donne une image du flux de neutrons incident.

Un problème déjà rencontré dans ce type de chambre à fission est celui de l'étanchéité au gaz, notamment à la jonction entre le corps de chambre (où se situe l'ensemble anode-cathode assurant la détection des neutrons) et le câble de liaison (assurant la propagation du signal jusqu'à l'électronique de traitement). En effet, la formation d'ions dans la chambre, sous l'impact des neutrons, dépend de la quantité de gaz présente dans cette chambre et, par conséquent, toute fuite de gaz entraîne une dérive de la réponse de la chambre à un signal donné.

Une solution, qui consiste à mettre l'ensemble constitué par la chambre et le câble de liaison sous pression n'est pas satisfaisante, puisqu'elle met en oeuvre un procédé de fabrication difficilement industrialisable de par sa lenteur (il faut atteindre un équilibre de pression entre la chambre et le câble) et que des phénomènes de migration de gaz entre le corps de la chambre et le câble de liaison ne permettent pas de garantir, sur une longue durée d'irradiation, une efficacité constante du détecteur (on constate souvent une dérive du signal). Par ailleurs, des phénomènes de microphonie à longue distance ont été constatés avec cette solution.

Un autre problème à résoudre est celui d'obtenir une chambre à fission possédant une bonne tenue mécanique, du fait notamment des vibrations qu'elle peut avoir à subir.

### Exposé de l'invention

Il faut donc résoudre le problème de l'isolement total entre le corps de la chambre et le câble, afin de ne mettre en pression que le corps de la chambre, ainsi que le problème de la migration du gaz entre le corps de la chambre et le câble, afin de garantir l'efficacité de détection sur une longue période de mesure. Toute solution à ce problème doit mettre en oeuvre des éléments ne se détériorant pas ou très peu à l'irradiation neutrons et γ et à la température. Pour des questions d'implantation de la chambre dans les tubes guides des assemblages combustibles, il faut que la solution soit compatible avec des chambres dont le diamètre est au maximum de 1,5 mm. Enfin, il faut une chambre ayant une bonne tenue mécanique.

La présente invention résout ces problèmes, en proposant une chambre à fission subminiature comportant un tube dont au moins une partie forme cathode, une anode située à l'intérieur du tube, reliée à des éléments conducteurs pour transmettre un signal électrique vers l'extérieur de la chambre, le tube pouvant être fermé à une première extrémité, cette chambre étant caractérisée en ce que la deuxième extrémité du tube est fermée par un bouchon en un matériau ne se détériorant pas ou très peu sous l'effet de l'irradiation par des neutrons ou par rayonnement γ, et sous l'effet de la température, ce bouchon permettant le passage étanche des éléments conducteurs vers l'extérieur du tube, et étant au moins en partie entouré d'une gaine, la gaine pénétrant avec le bouchon à l'intérieur du tube, la deuxième extrémité du tube étant soudée sur une partie extérieure de la gaine.

Avec ce système de fermeture, il est possible de ne mettre en pression, avec un gaz neutre, que le corps de chambre.

Le fait de souder l'extrémité du tube sur une partie extérieure de la gaine permet d'éviter tout phénomène de migration du gaz entre le corps de chambre et le câble de liaison, ce qui permet de garantir l'efficacité de détection.

Cette fermeture est tout à fait compatible avec une miniaturisation poussée permettant un corps de chambre ayant une longueur hors tout de 25 mm et un diamètre de l'ordre de 1,5 mm.

L'isolement total entre le corps de chambre et le câble de liaison permet de plus d'envisager, sans microphonie, de longues distances entre les détecteurs et l'électronique de traitement (de l'ordre de 30 m), ce qui est tout à fait compatible avec une instrumentation fixe en réacteur.

La structure de chambre à fission selon l'invention présente une meilleure tenue mécanique que les chambres connues selon l'art antérieur. En particulier, une meilleure résistance aux vibrations est assurée, ce qui est important dans le cas d'une utilisation dans un environnement d'installation nucléaire.

Enfin, la structure de la chambre et le choix, pour le bouchon, d'un matériau ne se détériorant pas sous l'effet des neutrons ou du rayonnement γ permet de réaliser un dispositif stable et étanche sous de hauts flux de neutrons ou de rayons γ.

De manière avantageuse, la gaine et le bouchon pénètrent dans le tube sur environ au moins 2 mm : ceci permet d'assurer une très bonne étanchéité et une très bonne tenue mécanique.

Un sous-problème résolu dans le cadre de l'invention, est celui du choix des matériaux constituant le tube et la gaine.

Avantageusement, le tube est en un alliage transparent aux neutrons et ayant une bonne tenue aux radiations et à la température. Le tube peut ainsi être par exemple en Inconel^{(TM)} ou en inox.

De même, la gaine peut également être en un alliage transparent aux neutrons et ayant une bonne tenue aux radiations et à la température, par exemple en Inconel ou en inox.

Par ailleurs, le choix de l'alumine comme matériau pour le bouchon, est très avantageux, puisqu'il ne peut pas se détériorer, ou très peu, sous l'effet des irradiations neutrons et γ et de la température. De préférence, l'alumine a une pureté au moins égale à 98%.

On peut choisir de l'alumine de pureté supérieure ou égale à 99,5%.

### Brève description des figures

De toute façon, les caractéristiques et avantages de l'invention apparaîtront mieux à la lumière de la description qui va suivre. Cette description porte sur les exemples de réalisation, donnés à titre explicatif et non limitatif, en se référant à des dessins annexés sur lesquels :
- la figure 1, déjà décrite, est une vue schématique d'une chambre de fission selon l'art antérieur,
- la figure 2, déjà décrite, est un dispositif de connexion à l'extrémité d'un câble coaxial de liaison,
- la figure 3 illustre un mode de réalisation d'une chambre de fission selon la présente invention.

### Description détaillée de modes de réalisation

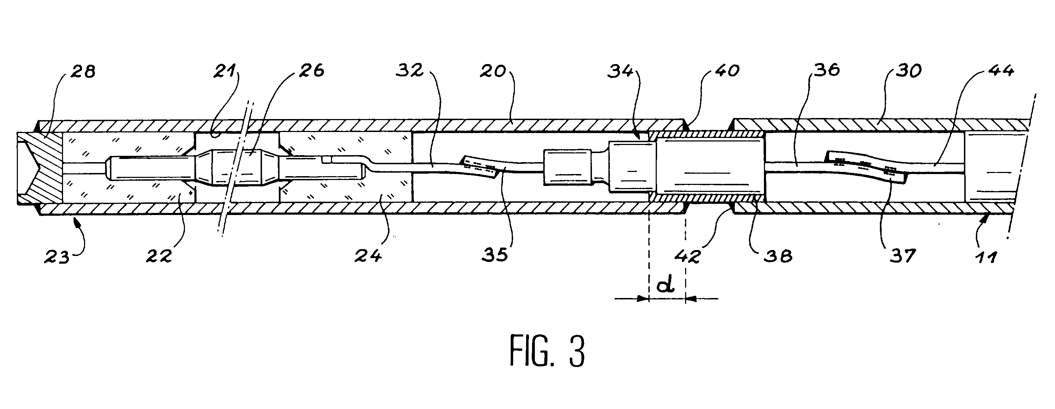

L'invention va être décrite en liaison avec le mode de réalisation illustré sur la figure 3. Sur cette figure, la référence 20 désigne un tube de diamètre extérieur sensiblement égal à 1,5 mm, et qui sert à la fois d'enveloppe à la chambre de fission et, pour au moins une partie désignée par la référence 21, de cathode. A l'intérieur de la chambre, deux isolateurs 22, 24, par exemple en rubis, supportent une anode centrale 26 recouverte d'un dépôt fissile (par exemple 200µg d'uranium 235). Le tube 20 est fermé à une de ses extrémités 23 par un bouchon 28, par exemple en inox. Lors de son utilisation, la chambre est remplie d'un gaz neutre, par exemple de l'argon à une pression de quelques bars (par exemple 4 bars), et le bouchon 28 sert à la fois au remplissage et à l'étanchéité de la chambre. L'anode 26 est reliée à des éléments conducteurs 32, 36 pour transmettre un signal électrique vers l'extérieur de la chambre. Ces éléments conducteurs 32, 36 sont eux-mêmes reliés à l'élément conducteur 44 du câble de liaison tel que le câble 11 représenté sur la figure 2, qui relie l'ensemble à un dispositif de connexion tel que celui déjà décrit ci-dessus, en liaison avec cette même figure 2.

Le conducteur 32 est relié à l'extrémité 35 du conducteur 36, à l'intérieur du tube 20 qui délimite la chambre de fission, tandis que l'autre extrémité 37 du conducteur 36 qui traverse le bouchon 34, est reliée au conducteur 44 à l'intérieur du prolongement du fourreau métallique extérieur 30 du câble 11. Le bouchon 34 est serti, au moins en partie, dans une gaine métallique 38 pouvant être soudée sur l'extrémité 40 du tube 20. De préférence, la gaine et le bouchon pénètrent dans le tube 20 sur une distance d d'environ 2 mm ou plus.

La gaine métallique peut se prolonger sur tout le bouchon 34 auquel cas l'extrémité 42 du fourreau 30 peut également être soudée sur cette gaine. Le fait de souder l'extrémité 42 du fourreau 30 permet de rendre étanche à l'humidité la liaison entre le bouchon et le câble coaxial. En effet, le bouchon en alumine étant très hygroscopique, la présence éventuelle d'humidité détériore l'isolement électrique du conducteur, ayant pour conséquence une dégradation du signal.

Le matériau constitutif de ce bouchon est un matériau qui ne se détériore pas, ou peu, sous l'effet de l'irradiation par neutrons ou γ et sous l'effet de la température. En particulier, il est souhaitable qu'il n'y ait pas détérioration d'une part sous l'effet de flux de l'ordre de 10²¹-10²² neutrons/cm², et d'autre part pour des températures T≤350°C. C'est par exemple de l'alumine, qui présente une faible section efficace par rapport aux flux de neutrons thermiques. De plus, ce matériau est isolant et permet une traversée directe des éléments conducteurs 32, 36. Plus la pureté de l'alumine est grande, plus la section efficace de capture des neutrons est faible : de préférence, l'alumine a donc une pureté au moins égale à 98%, par exemple supérieure ou égale à 99,5%. Avantageusement, la soudure est réalisée par laser.

Le tube 20 et la gaine 38 sont avantageusement constitués d'un alliage transparent aux neutrons et ayant une bonne tenue aux radiations et à la température. Ils peuvent être par exemple en Inconel ou en inox, et sont de préférence tous les deux constitués du même matériau.

Avec ce bouchon et sa fermeture par soudure, on obtient un isolement total entre le corps de chambre et le câble de liaison, ce qui permet de ne mettre en pression que le corps de chambre : cette solution est réalisable industriellement.

L'ensemble fonctionne de la même manière que le capteur selon l'art antérieur : il y a ionisation du gaz contenu dans le corps de chambre et comptage des impulsions correspondantes.

Une bonne tenue aux radiations, avec la structure selon l'invention, peut être atteinte pour des flux de neutrons d'au moins 5x10²⁰ neutrons/cm², et jusqu'à 10²¹-10²² neutrons/cm².

## Revendications

1. Chambre à fission subminiature, comportant un tube (20) dont une partie (21) au moins forme cathode, une anode (26) située dans le tube, reliée à des éléments conducteurs (32, 36) pour transmettre un signal électrique vers l'extérieur de la chambre, le tube pouvant être fermé à une première extrémité (23), la chambre étant caractérisée en ce que la deuxième extrémité (40) est fermée par un bouchon (34) en un matériau ne se détériorant pas, ou très peu, sous l'effet de l'irradiation par des neutrons ou par rayonnement γ, et sous l'effet de la température, ce bouchon permettant le passage étanche des éléments conducteurs (32, 36) vers l'extérieur du tube (20), et étant au moins en partie entouré d'une gaine (38), la gaine (38) pénétrant avec le bouchon (34) à l'intérieur du tube (20), la deuxième extrémité du tube (20) étant soudée sur une partie extérieure de la gaine (38).

2. Chambre à fission selon la revendication 1, la gaine (38) et le bouchon (34) pénétrant à l'intérieur du tube (20) sur une distance d'au moins 2 mm.

3. Chambre à fission selon l'une des revendications 1 ou 2, le tube (20) dont une partie au moins forme cathode, et la gaine (38) entourant au moins en partie le bouchon (34), étant chacun en un alliage transparent aux neutrons et ayant une bonne tenue aux radiations et à la température.

4. Chambre à fission selon la revendication 3, le tube (20) et la gaine (38) étant en Inconel^{(TM)} ou en inox.

5. Chambre à fission selon l'une des revendications précédentes, la gaine (38) étant soudée à l'extrémité du tube (20).

6. Chambre à fission selon la revendication 5, la gaine (38) étant susceptible d'avoir été soudée par laser.

7. Chambre à fission selon l'une des revendications précédentes, le bouchon (34) étant en alumine.

8. Chambre à fission selon la revendication 7, l'alumine étant de pureté au moins égale à 98%.

9. Chambre à fission selon la revendication 8, l'alumine étant de pureté supérieure ou égale à 99,5%.

## Patentansprüche

1. Subminiatur-Spaltkammer mit einem Rohr (20), von dem wenigstens ein Teil (21) die Kathode bildet, und einer Anode (26), in dem Rohr befindlich und mit leitfähigen Elementen (32, 36) verbunden, um ein elektrisches Signal zur Außenseite der Kammer zu übertragen, wobei das Rohr an einem ersten Ende (23) geschlossen sein kann und die Kammer **dadurch gekennzeichnet** ist, dass das zweite Ende (40) durch einen Stopfen (34) aus einem Material verschlossen ist, das sich unter der Wirkung der Bestrahlung durch Neuronen oder von Röntgenstrahlung sowie unter der Einwirkung der Temperatur nicht oder nur sehr wenig verschlechtert, wobei dieser Stopfen die dichte Durchführung der leitfähigen Elemente (32, 36) zur Außenseite des Rohrs (20) ermöglicht und wenigstens teilweise von einer Hülse (38) umgeben ist und diese Hülse (38) mit dem Stopfen (34) ins Innere des Rohrs (20) eindringt und dabei das zweite Ende des Rohrs (20) auf einem Außenteil der Hülse (38) festgeschweißt ist.

2. Spaltkammer nach Anspruch 1, wobei die Hülse (38) und der Stopfen (34) über eine Distanz von wenigstens 2 mm ins Innere des Rohrs (20) eindringen.

3. Spaltkammer nach einem der Ansprüche 1 oder 2, wobei sowohl das Rohr (20), von dem wenigstens ein Teil die Kathode bildet, als auch die wenigstens teilweise den Stopfen (34) umgebende Hülse (38) aus einer für Neutronen durchlässigen Legierung sind und ein gutes Verhalten unter Strahlen- und Temperaturbelastung haben.

4. Spaltkammer nach Anspruch 3, wobei das Rohr (20) und die Hülse (30) aus lnconel™ oder aus Inox bzw. einem nichtoxidierbaren Material sind.

5. Spaltkammer nach Anspruch 3, wobei die Hülse (38) am Ende des Rohrs (20) festgeschweißt ist.

6. Spaltkammer nach Anspruch 5, wobei das Festschweißen der Hülse (38) mittels Laserstrahl erfolgt.

7. Spaltkammer nach einem der vorangehenden Ansprüche, wobei der Stopfen (34) aus Aluminiumoxid ist.

8. Spaltkammer nach Anspruch 7, wobei das Aluminiumoxid eine Reinheit von wenigstens gleich 98% hat.

9. Spaltkammer nach Anspruch 8, wobei die Reinheit des Aluminiumoxids gleich oder höher als 99,5% ist.

## Claims

1. Subminiature fission chamber having a tube (20), whereof one part (21) at least forms a cathode, an anode (26) located in the tube, connected to conductor elements (32, 36) for transmitting an electric signal to the outside of the chamber, the tube being sealable at a first end (23), the chamber being characterized in that the second end (40) is sealed by a plug (34) made from a material which does not or only slightly deteriorates under the effect of irradiation by neutrons or γ radiation and under the effect of heat, said plug permitting the tight passage of conductor elements (32, 36) to the outside of the tube (20), and being at least partly surrounded by a sheath (38), the sheath (38) penetrating together with the plug (34) into the interior of the tube (20), the second end of the tube (20) being welded to an outer part of the sheath.

2. Fission chamber according to claim 1, the sheath (38) and the plug (34) penetrating the interior of the tube (20) over a distance of at least 2 mm.

3. Fission chamber according to either of the claims 1 and 2, the tube (20), whereof at least part forms a cathode, and the sheath (38) surrounding at least partially the plug (34), being in each case made from a neutron-transparent alloy having a good resistance to radiation and heat.

4. Fission chamber according to claim 3, the tube (20) and sheath (38) being made from Inconel(™) or stainless steel.

5. Fission chamber according to any one of the preceding claims, the sheath (38) being welded to the end of the tube (20).

6. Fission chamber according to claim 5, the sheath (38) being laser weldable.

7. Fission chamber according to any one of the preceding claims, the plug (34) being made from alumina.

8. Fission chamber according to claim 7, the alumina having a purity of at least 98%.

9. Fission chamber according to claim 8, the alumina having a purity equal to or higher than 99.5%.
